# FASCICULE DE BREVET EUROPEEN

(11) **EP 3 891 101 B1**
(45) Date de publication et mention de la délivrance du brevet: **07.08.2024**
(21) Numéro de dépôt: 19868216.3
(22) Date de dépôt: 05.12.2019
(51) Int. Cl.: C02F 1/461, C02F 1/467, C25B 11/03, C25B 11/04, C02F 101/34, C02F 101/38

(54) **DISPOSITIF ÉLECTROCHIMIQUE DE PURIFICATION D'UN FLUIDE, NOTAMMENT D'EAUX USEES**
ELEKTROCHEMISCHE VORRICHTUNG ZUR REINIGUNG EINES FLUIDS, INSBESONDERE ABWASSER
ELECTROCHEMICAL DEVICE FOR PURIFYING A FLUID, IN PARTICULAR WASTE WATER

(30) Priorité: 07.12.2018 FR 1872477
(43) Date de publication de la demande: 13.10.2021
(73) Titulaire: SAINT-GOBAIN CENTRE DE RECHERCHES ET D'ETUDES EUROPEEN, 92400 Courbevoie (FR)
(72) Inventeur: RAFFY, Stéphane, 84300 CAVAILLON (FR); BOUSSANT-ROUX, Yves Marcel Léon, 84140 MONTFAVET (FR); SALLES, Corinne, 84300 CAVAILLON (FR); AUBERT, Brice, 84250 LE THOR (FR)
(74) Mandataire: Saint-Gobain Recherche
(86) Numéro de dépôt international: PCT/FR2019/052944
(87) Numéro de publication internationale: WO 2020/115442

(56) Documents cités:
- EP-A1- 0 443 230
- EP-A2- 0 172 504
- WO-A1-2018/035474
- US-A- 5 376 240
- US-A1- 2006 199 061
- XU BAOQIANG ET AL: "Structures, preparation and applications of titanium suboxides", RSC ADVANCES, vol. 6, no. 83, 1 January 2016 (2016-01-01), pages 79706 - 79722, XP093043369, DOI: 10.1039/C6RA14507H
- JING YIN ET AL: "Electrochemical impedance spectroscopy study of membrane fouling and electrochemical regeneration at a sub-stoichiometric TiO2reactive electrochemical membrane", JOURNAL OF MEMBRANE SCIENCE, ELSEVIER BV, NL, vol. 510, 16 March 2016 (2016-03-16), pages 510 - 523, XP029513742, ISSN: 0376-7388, DOI: 10.1016/J.MEMSCI.2016.03.029
- CLÉMENT TRELLU ET AL: "Mineralization of organic pollutants by anodic oxidation using reactive electrochemical membrane synthesized from carbothermal reduction of TiO2", WATER RESEARCH, vol. 131, 28 December 2017 (2017-12-28), AMSTERDAM, NL, pages 310 - 319, XP055624263, ISSN: 0043-1354, DOI: 10.1016/j.watres.2017.12.070

## Description

L'invention se rapporte à un dispositif électrochimique, notamment utile pour le traitement des fluides et tout particulièrement des liquides, notamment la purification des eaux usées comprenant des composés organiques.

Les difficultés de gestion des effluents et de leur teneur en produits polluants et notamment les polluants organiques, est à l'heure actuelle un enjeu majeur de nos sociétés. Jusqu'à une période récente, certains de ces produits étaient rejetés dans les effluents de traitement eaux usées sans qu'ils soient traités spécifiquement. Les législations actuelles régulent de plus en plus sévèrement de tels rejets.

Tout particulièrement, de nombreux composés organiques contenus dans les effluents industriels sont toxiques pour l'environnement. Le procédé de traitement le plus répandu des rejets organiques est à l'heure actuelle la voie biologique. Toutefois les micro-organismes utilisés sont inadaptés dans certains cas de produits bioréfractaires ou toxiques comme les médicaments. Parmi les techniques physico-chimiques alternatives, l'électrochimie est aujourd'hui une voie très prometteuse pour réaliser un prétraitement précédant par exemple le procédé biologique ou même pour réaliser la dégradation jusqu'au terme ultime en dioxyde de carbone et en eau des produits organiques. Un procédé électrochimique ne nécessite avantageusement aucun ajout d'oxydant ou autre composé chimique et s'avère donc particulièrement propre.

Pour améliorer le traitement d'effluents chargés en polluants bioréfractaires (par exemple des médicaments comme les antibiotiques, les anti-inflammatoires, ou encore des colorants textiles ou des produits pharmaceutiques, ...) non éliminés par les méthodes conventionnelles, on peut utiliser des systèmes membranaires qui doivent avoir deux fonctions : d'une part permettre la rétention des composés organiques à traiter et d'autre part assurer leur dégradation par électrochimie. Les composants utilisés dans de tels systèmes membranaires doivent donc présenter une porosité adaptée par rapport à la taille des particules polluantes mais permettre de laisser passer l'effluent traité tout en le ralentissant, prolongeant ainsi le contact des composés à dégrader avec la membrane, sans générer une trop grande perte de charge. Il doit également être électroactif c'est-à-dire permettre la dégradation des composés polluants en matière non-toxique ou en dioxyde de carbone par électrochimie.

Il existe donc actuellement un besoin de mettre au point des membranes jouant le rôle d'électrodes comprenant ou constitué par un matériau d'anode et/ou de cathode, de préférence d'anode, stable permettant de réaliser la dégradation au moins partielle voire complète du squelette moléculaire des produits organiques. Cependant, le simple transfert d'électrons à l'interface entre la membrane et le fluide à purifier ne semble pas permettre, à lui seul, d'accomplir la dégradation. Il faut en effet générer des oxydants puissants tels que les radicaux hydroxyles à la surface de la membrane. Le choix du matériau constituant la membrane utilisée comme électrode, notamment comme anode, est donc un élément essentiel du procédé de traitement. En outre, les matériaux envisageables industriellement doivent posséder une bonne résistance chimique dans les milieux acides et caustiques mais aussi une durée de vie importante.

Dans ce but, il a été développé dans les années 1990 des électrodes pour l'élimination des composés organiques dans des eaux usées par électrolyse oxydative, notamment à base de diamant dopé au bore (DDB) comme indiqué dans la publication « Electrochemical synthesis on boron-doped-diamond, Waldvogel et al.; Electrochimica Acta 82 (2012) 434-443). Ce composé présente une efficacité remarquable, car permettant la génération d'espèces très oxydantes, telles que des radicaux *OH, utiles et très efficaces pour la dégradation des composés organiques. Le DDB présente en outre une forte inertie chimique aux milieux acides et basiques. C'est par ailleurs un matériau coûteux et difficile à mettre en oeuvre sur de grandes surfaces et/ou dont l'adhésion avec le substrat n'est pas toujours optimale.

On connaît par ailleurs des produits poreux à base de sous-oxydes de titane, en particulier constitués par ou comprenant des matériaux à base de phase de magnéli Ti₄O₇, Ti₅O₉ ou encore Ti₆O₁₁ et tout particulièrement à base de Ti₅O₉. Selon un premier de ses aspects, la présente invention propose d'utiliser un tel matériau ne présentant pas les inconvénients du DDE comme l'un des constituants de l'électrode, en particulier de l'anode. La demande de brevet WO2018/115749A1 décrit un produit poreux entièrement à base de sous oxyde de titane TiOₓ et son procédé de fabrication.

L'article "Electrochemical impédance spectroscopy study of membrane fouling and electrochemical régénération at a substoichiometric TiO2 reactive electrochemical membrane" publié dans le Journal of Membrane Science, 510-523, (2016) décrit l'utilisation d'une membrane constituée de Ti₄O₇ et Ti₆O₁₁ présentant une porosité de 28,2% avec une taille médiane de pore de 3,27 µm ainsi qu'une distribution des pores bimodale.

L'article « Development and Characterization of Ultrafiltration TiO2 Magnéli Phase Reactive Electrochemical Membranes" de la publication « Environ Science and Technologie », 50(3), p1428-36 (2016) décrit des produits poreux et en particulier une membrane électrochimique poreuse utilisée pour l'ultrafiltration, dont la porosité est de l'ordre de 30% et le diamètre médian des pores de 2,99 micromètres.

Toutes les publications citées précédemment concernent des électrodes constituées exclusivement d'oxydes de titane céramique. Une telle électrode peut cependant être difficile à mettre en œuvre effectivement car le matériau céramique qui la constitue est nécessairement cassant.

L'efficacité d'une telle électrode peut néanmoins être améliorée. En effet, il est connu que seule une faible épaisseur de ces électrodes céramiques est active pour générer des radicaux °OH (cf Mineralization of organic pollutants by anodic oxidation using reactive electrochemical membrane synthesized from carbothermal réduction of TiO₂, C. TRELLU et al, Water Research vol 131, 310-319).

Le document WO2018/0354674 décrit une configuration dans laquelle des supports faits de disques de Ti4O7, servant d'anode ou de cathode, sont recouverts d'un revêtement de titane.

Le document US 2006/199061 porte sur le domaine des piles à combustible. Il y est décrit un support métallique revêtu d'un revêtement susceptible de le protéger de la corrosion ou de l'oxydation dans les conditions de fonctionnement d'une pile à combustible.

Le document US5376240 propose un dispositif permettant la réduction des espèces polluantes. Une cellule électrochimique est décrite pour réduire la concentration d'espèces oxyazotées dans des solutions aqueuses en azote gazeux et/ou en ammoniac sans danger pour l'environnement.

La demande de brevet EP0172504A2 décrit un réacteur biologique dans lequel des composés organiques réagissent en présence de biocatalyseurs dans un réacteur, incluant la régénération des bioenzymes sur une électrode polarisée.

La publication « JING YIN ET AL: "Electrochemical impédance spectroscopy study of membrane fouling and electrochemical régénération at a substoichiometric TiO2 reactive electrochemical membrane", JOURNAL OF MEMBRANE SCIENCE, ELSEVIER BV, NL, vol. 510, 16 mars 2016, pages 510-523 » décrit un dispositif électrochimique de purification d'un fluide comprenant un support constitué par un suboxyde de titane dont la taille des pores est de l'ordre de 3 micromètres.

Dans le cadre du traitement de fluides contaminés et en particulier des eaux usées telles que des eaux d'évacuation domestiques, il existe un besoin continu pour des dispositifs et/ou membranes performants et faciles à mettre en œuvre permettant une oxydation d'éléments autrement difficilement éliminables tels que les composés organiques, en particulier les médicaments. L'objet de la présente invention vise à fournir un tel dispositif.

Plus précisément, la présente invention se rapporte selon un premier aspect à un dispositif de purification d'un fluide, notamment d'eaux usées ou de boues, comprenant une membrane filtrante selon les revendications qui suivent.

Dans la suite de la présente description, pour des raisons de concision, on désignera simplement par «TiOₓ», le matériau TiOₓ dont la valeur de x varie entre 1,5 et 1,9, de préférence entre 1,6 et 1,9, selon l'invention.

Par pore (ou pore ouvert ou pore traversant) on entend au sens de l'invention toute cavité ouverte sur l'extérieur dans le matériau, éventuellement par interconnexion avec d'autres cavités du matériau, et permettant la traversée dudit matériau par le fluide à traiter. Dans un cas limite, un pore selon l'invention est donc un trou d'une maille, notamment lorsque le support est constitué par un tissu ou une grille. Par poreux on entend donc au sens de l'invention une structure dotée de trous traversants, quelle que soit la forme et la taille des trous. Par traversants, on entend que lesdits trous permettent une connexion de fluide entre les deux surfaces principales de ladite structure.

On donne ci-après des modes de réalisations préférés de l'invention, mais qui ne doivent pas être considérés comme limitant la portée de la présente invention :
- Le support comprend ou est constitué d'un métal choisi parmi le titane, l'inox, de préférence le titane.
- Le support présente une porosité comprise entre 20 et 80%.
- Le support présente un diamètre de pore médian supérieur à 70 micromètres de préférence supérieure à 100 micromètres.
- Le support est sous la forme d'une plaque ou d'un tube.
- Le matériau constituant la couche de revêtement comprend plus de 90% en poids, au total, de phases de Magnéli sélectionnées parmi Ti₄O₇, Ti₅O₉, Ti₆O₁₁ ou d'un mélange d'au moins deux de ces phases.
- Le dispositif comprend en outre des moyens d'introduction du fluide à purifier, des moyens de circulation du fluide, de son éventuelle mise sous pression, des moyens de mise sous tension électrique du support et des moyens de récupération du fluide purifié.

La présente spécification divulgue aussi une membrane comprenant :
- un support métallique, notamment choisi parmi une grille, un tissu, une mousse à pores ouverts ou un nid d'abeille, ledit support étant perméable audit fluide,
- une couche de revêtement dudit support comprenant ou de préférence étant constitué par un oxyde de titane de formule générique TiOₓ, avec x compris entre 1,5 et 1,9.

Par souci de concision, les caractéristiques optionnelles décrites précédemment d'une telle membrane ne sont pas reprises ici mais font bien évidemment partie de la présente divulgation.

Enfin il est aussi divulgué différents procédés permettant l'obtention de la membrane précédemment décrite et notamment :
Selon un premier procédé de fabrication d'une membrane le support comprend ou est constitué de titane, et la couche de revêtement est obtenue par oxydation par anodisation ou traitement chimique du support pour l'obtention d'une couche comprenant du TiO₂ puis réduction dudit TiO₂ en un oxyde de titane de formule générique TiOx, avec x compris entre 1,5 et 1,9.

Selon un second procédé de fabrication d'une membrane filtrante, selon une première étape, on contacte le substrat métallique avec une solution de type sol-gel comprenant du titane, par exemple une solution d'un alcoxyde de titane tétravalent en milieu alcoolique ou aqueux, ladite solution incluant éventuellement une source de carbone supplémentaire telle qu'un composé organique supplémentaire ou de carbone noir, puis une seconde étape de traitement thermique de la couche sol-gel pour l'obtention d'une couche de revêtement de TiOx, à une température comprise entre 500°C mais ne dépassant pas 1430°C à la pression atmosphérique, sous atmosphère neutre ou réductrice.

Selon un troisième procédé de fabrication d'une membrane filtrante, le dépôt de la couche de revêtement sur le support est effectué par imprégnation à partir d'une suspension aqueuse ou d'un autre solvant d'une poudre de TiOx, suivi d'un traitement thermique à une température comprise entre 500°C mais ne dépassant pas 1430°C à la pression atmosphérique, sous atmosphère neutre ou réductrice.

Selon un quatrième procédé de fabrication d'une membrane filtrante, le dépôt de la couche de revêtement sur le support est effectué par imprégnation à partir d'une suspension aqueuse ou d'un autre solvant d'un mélange de poudre d'oxyde de titane TiO2, préférentiellement sous forme anatase, complété par une source de carbone supplémentaire telle qu'un composé organique supplémentaire ou du noir de carbone (carbon black), la couche de TiOx étant obtenue par réduction de ladite couche de TiO₂ par un traitement thermique ultérieur à une température comprise entre 800°C mais ne dépassant pas 1430°C à la pression atmosphérique, sous atmosphère neutre ou réductrice.

Selon un cinquième procédé de fabrication d'une membrane filtrante, le dépôt de la couche de revêtement sur le support métallique est effectué par projection thermique, en particulier plasma de particules de TiOx sur ledit support.

L'utilisation comme membrane, dans le dispositif de purification tel que précédemment décrit, du support métallique poreux perméable au fluide à traiter revêtu par la couche de sous-oxyde(s) de titane, présente en particulier l'avantage d'améliorer le transport de masse en maximisant la zone de contact possible entre l'électrode et le fluide à traiter pour une efficacité maximale de l'élimination des polluants organiques traversant le dispositif.

Plus particulièrement, un tel dispositif présente les avantages suivants :
- une forte augmentation de la surface d'échange entre le fluide à traiter et la membrane,
- l'amélioration de l'efficacité du traitement via une facilitation du transport de masse, le fluide à traiter passant à travers la membrane poreuse servant d'électrode, notamment d'anode dans la réaction électrochimique de dégradation des polluants organiques,
- une diminution de la densité de courant réellement subie par le matériau TiOₓ et donc l'augmentation de sa durée de vie,
- une perte de charge ohmique réduite grâce à la présence du substrat métallique supportant un sous-oxyde lui-même très conducteur. Une telle association permet ainsi au final une moindre consommation électrique du dispositif de purification,
- une meilleure homogénéité du potentiel dans tout le volume de la membrane,
- un temps et une surface de contact très fortement augmentés entre l'électrode et les espèces polluantes, en raison de la nature poreuse du support et éventuellement de son revêtement, favorisant l'efficacité de la conversion,
- une très bonne résistance mécanique avec en particulier une bonne résistance à la rupture du fait de la combinaison entre le support métallique, notamment sous la forme d'une grille ou d'une mousse, et le revêtement d'oxyde céramique,
- une augmentation de la taille de la zone active de la membrane en limitant la chute de potentiel dans toute l'épaisseur du revêtement céramique en TiOₓ grâce à l'augmentation de la conductivité électrique globale de l'électrode, elle-même liée à l'utilisation du support métallique.

La couche de revêtement finale répond à la formulation générique TiOx, la valeur de x étant de préférence comprise comprise entre 1,5 et 1,9, de préférence entre 1,6 et 1,9, et de préférence entre 1,75 et 1,85 et plus particulièrement constituée essentiellement de phase de type TiₙO₂ₙ₋₁, n étant un nombre entier supérieur ou égal à 4 et inférieur ou égal à 9. Elle est constituée en particulier pour au moins 70% en poids, au total, des phases Ti₄O₇, Ti₅O₉, Ti₆O₁₁, de préférence au moins 80% voire au moins 90%, au total (en cumulé) des phases Ti₄O₇, Ti₅O₉, Ti₆O₁₁, notamment au moins 90%, au total (en cumulé) des phases Ti₄O₇ et Ti₅O₉, notamment au moins 90%, au total (en cumulé) de la phase Ti₅O₉. La couche de revêtement selon l'invention comprend très avantageusement plus de 90% en poids, au total, de sous-oxyde(s) de titane répondant à la formulation générique TiₙO₂ₙ₋₁. De préférence ladite couche de revêtement comprend au total plus de 92%, voire plus de 94%, ou encore plus de 95% de sous-oxyde(s) de titane, en particulier les phases Ti₄O₇, Ti₅O₉, Ti₆O₁₁.

Toutes les données de porosité ouverte globale et de taille médiane de pores décrites dans la présente description, en deçà de ou égale à 300 micromètres, peuvent être mesurées par porosimétrie au mercure. Le volume de pores est mesuré par intrusion de mercure à 2000 bars à l'aide d'un porosimètre à mercure Autopore IV série 9520 Micromeritics, sur un échantillon de 1cm³. La norme applicable est l'ISO15901-1 : 2016 part 1. L'augmentation de pression jusqu'à haute pression conduit à « pousser » le mercure dans des pores de taille de plus en plus petite. Le diamètre médian (noté D₅₀ dans les tableaux) de pores correspond à un seuil de 50% de la population en volume.

Au-delà d'une taille de pores de 300 micromètres, on mesure de préférence les paramètres de porosité et de taille médiane de pores à partir d'analyse d'images de la surface ou d'une coupe de la pièce (en particulier grille, tissu...) à partir de clichés optiques ou de microscopie de la manière suivante :
Une série de clichés est prise de la surface du support ou d'une section. Pour plus de netteté, les clichés peuvent être effectués sur une section polie de la surface du matériau. L'acquisition de l'image est effectuée de telle façon qu'elle renferme au moins 100 pores représentatifs afin de déterminer une moyenne représentative de l'ensemble de l'échantillon. Pour chaque pore, une mesure de son aire est réalisée. Un diamètre équivalent de pores est déterminé(e), correspondant au diamètre d'un disque parfait de même aire que celui mesuré pour ledit pore (cette opération pouvant éventuellement être réalisée à l'aide d'un logiciel dédié notamment Visilog^{®} commercialisé par Noesis ou encore du logiciel imageJ). Une distribution de taille de diamètre de pores en volume est ainsi obtenue selon une courbe classique de répartition et un diamètre médian de pores en volume peut être également déterminé.

Lorsque le substrat est une grille et un tissu, ce qui ne correspond pas à l'invention, la détermination des paramètres de porosité est déterminée à partir d'une image de la surface du support.

La porosité globale, pour de tels supports peut être également obtenue par la méthode d'Archimède si le volume de la pièce n'est pas facilement mesurable.

Dans un mode de réalisation particulièrement bien adapté aux fluides comportant peu de polluants, le diamètre de pore médian est de préférence inférieur à 50 microns, voire inférieur à 40 microns. En effet, il est important de favoriser au maximum le transport de masse, notamment en diminuant la taille des pores.

Dans un autre mode de réalisation particulièrement bien adapté aux fluides très chargés en polluants, le diamètre de pore médian est de préférence supérieur à 70 microns, voire supérieur à 80 microns, voire supérieur à 100 microns pour éviter le colmatage.

Sans sortir du cadre de la présente invention, les couches peuvent cependant comprendre d'autres phases, en particulier de la silice (SiO₂), ou bien d'autres éléments, présents essentiellement sous forme oxyde, ou sous forme de composé défini (par exemple KTi₈O₁₆) ou en solution solide avec le ou les sous-oxyde(s) de titane, notamment Al, Cr, Zr, Nb, Ta, Li, Fe, les alcalins ou les alcalino-terreux du type Ca, Sr, Na, K, Ba. Sur la base des oxydes simples correspondants, la quantité sommée totale desdits éléments présents est de préférence inférieure à 10% poids de la masse totale du produit, par exemple inférieure à 5%, voire inférieure à 4%, ou même inférieure à 3% poids de la masse totale du produit. La présence de ces éléments peut notamment être désirée mais est généralement et uniquement liée aux impuretés présentes dans les matières premières utilisées.

Selon un mode préféré de réalisation de l'invention, les produits poreux selon l'invention sont constitués uniquement desdits sous-oxydes de titane, les autres phases n'étant présentes que sous la forme d'impuretés inévitables.

En particulier, lesdits sous-oxydes de titane sont de préférence principalement des phases TiₙO₂ₙ₋₁ dans lesquelles n est compris entre 4 et 6, bornes incluses, c'est-à-dire Ti₄O₇, Ti₅O₉, Ti₆O₁₁ qui présentent les meilleures conductivités électroniques, lesdites phases représentant de préférence et au total, plus de 80%, voire 85% ou même 90% du poids des produits selon l'invention. Lesdits sous-oxydes de titane comportent de préférence encore, un mélange de Ti₄O₇ et de Ti₅O₉ comme phases principales.

Par « principalement », on entend que les pics de diffraction principaux observés sur un diffractogramme de rayons X correspondent à ces phases de Magnéli.

En particulier, au sens de la présente invention, une phase est considérée comme « principale » si elle représente plus de 25% du poids du produit et de préférence au moins 35%, voire au moins 45% du poids du produit.

Les pourcentages poids respectifs des différentes phases constituant le produit selon l'invention peuvent être déterminés selon les techniques bien connues dans le domaine, en particulier par diffraction des rayons X, par exemple par simple comparaison des rapports d'intensité entre les pics de diffraction des différentes phases présentes ou encore de façon plus précise par analyse Rietveld, selon les techniques bien connues dans le domaine.

Comme indiqué précédemment, le support de la membrane est, dans le cadre de l'invention, une mousse à pores ouverts. En dehors du cadre de l'invention, le support peut s'agir d'une grille ou d'un tissu, sans que cette liste soit exhaustive.

Selon un mode de réalisation en dehors du champ de l'invention, le support est une grille, par exemple sous forme de métal déployé ou encore un tissu de fils métalliques assemblés. La maille de la grille ou du tissu de fils métalliques peut être de toute forme (carré, rectangle, losange, etc.). Ses dimensions caractéristiques (longueur et largeur) et/ou sa périodicité sont comprises entre 100 micromètres et 20 millimètres, notamment entre 300 micromètres et 10mm. Sa porosité est alors de préférence comprise entre 10% et 90% et notamment entre 20% et 80%. Son diamètre de pores médian est compris entre 100 micromètres et 10 millimètres.

Par mousse on entend au sens de l'invention une structure poreuse tridimensionnelle présentant une porosité interconnectée. Selon l'invention, la porosité d'une mousse selon l'invention est comprise entre 20% et 90%, de préférence encore entre 20% et 70%, ou même entre 30% et 60%. Selon l'invention, le diamètre médian des pores de la mousse est compris entre 20 micromètres et 10 millimètres, de préférence entre 20 micromètres et 5 millimètres, voire entre 70 micromètres et 2 millimètres. Selon un autre mode de réalisation possible, le diamètre médian des pores d'une mousse selon l'invention peut être compris entre 20 micromètres et 50 micromètres.

Le support et par suite la membrane peuvent être mis en forme selon toute configuration possible, notamment sous la forme d'une plaque ou d'un tube.

Le support peut se présenter sous la forme d'une plaque poreuse ou percée de trous ou d'un tube poreux, sur la surface extérieure et/ou intérieure duquel est déposé le revêtement d'oxyde de titane TiOₓ.

Le support selon l'invention comprend un ou plusieurs constituants de nature métallique, c'est à dire dont la conductivité électrique est supérieure à 10³ Siemens par centimètre.

Selon un mode de réalisation, le support comporte un film discret ou continu d'éléments sous forme métallique ou oxydes de Ru, Ir, Sn, Nb, Ta et/ou Sb. Selon un autre mode de réalisation, ce film se situe à la surface de couche de revêtement.

Selon un mode de réalisation particulier, le dispositif est constitué de plusieurs membranes constituant un ensemble de groupes comprenant au moins une anode et une cathode, de préférence le fluide rencontre d'abord une cathode. Selon un mode de réalisation particulièrement bien adapté aux membranes comportant des plaques, chaque membrane est disposée de telle sorte que sa porosité soit en décalage par rapport à celle de la cathode du même couple. De préférence, un matériau isolant est disposé entre chaque électrode du groupe. De préférence, chaque couple est séparé par un matériau isolant ou un espacement suffisant.

Dans le cas d'anodes constituées d'un support métallique sous forme de mousse revêtue uniquement en surface de TiOx (par exemple par projection plasma), alors le revêtement existe sur les 2 faces de la mousse, afin de doubler la surface capable de produire des radicaux oxydants °OH.

Selon un autre mode de réalisation, la membrane selon l'invention est un tube poreux en Ti revêtu de TiOₓ ; la cathode est
- soit une tige métallique placée dans l'axe à l'intérieur du tube (mode « intérieur -> extérieur »).
- soit un tube métallique de plus grand diamètre que le tube-membrane, et placé également axialement par rapport au tube-membrane (mode « extérieur -> intérieur »).

L'effluent à traiter est alors admis sous pression dans l'espace entre le tube-membrane et la tige ou le tube métallique. Du fait de la pression, une partie de l'effluent passe à travers la porosité du tube-membrane, le reste étant recirculé (mode « tangentiel »), ou l'effluent passe en totalité à travers la porosité du tube-membrane en l'absence de recirculation (mode « frontal »).

Dans tous ces modes de réalisation, il est possible d'inverser périodiquement la polarité du système afin que la membrane constituée de métal et de TiOx, fonctionne périodiquement comme cathode, ceci afin de prolonger sa durée de vie. Dans ces cas-là, il est possible que la deuxième électrode soit également constituée de Ti et de TiOx ou de TiOx uniquement, afin de générer des radicaux °OH en continu.

Selon un mode de réalisation, la membrane constitue l'anode du dispositif selon l'invention. La cathode est par exemple constituée d'une grille de titane.

Le support de la membrane est alors notamment un métal choisi dans le groupe constitué par de l'inox ou de préférence du titane. D'autres métaux peuvent également être sélectionnés pour constituer le support, notamment choisi parmi les aciers. Le choix du métal Ti ou d'un métal contenant du Ti est avantageux en raison de sa bonne conductivité électrique. Une faible consommation électrique de l'anode est donc possible. Selon l'invention, pour favoriser la dégradation électrochimique des organiques, il est nécessaire d'établir une bonne connexion électrique entre le support et la source d'alimentation électrique du dispositif et assurer ainsi un contrôle efficace du flux de courant passant à travers la membrane.

Un support en titane présente également l'avantage d'une bonne résistance à la corrosion dans des conditions où le fluide à purifier est soit acide soit basique.

Enfin, il a également été trouvé qu'un niveau d'adhésion très satisfaisant pouvait être obtenu entre le substrat notamment en titane et son revêtement en oxyde de titane TiOₓ.

De telles caractéristiques garantissent au final le bon fonctionnement, la fiabilité et la durabilité du dispositif de purification équipé d'une telle membrane.

Selon un mode de réalisation particulier, la couche de revêtement se présente sous la forme d'une mousse d'oxyde de titane TiOₓ d'une épaisseur comprise supérieure à 0,1 et de préférence inférieure à 10 centimètres, voire inférieure à 2 centimètres. Selon un tel mode, le revêtement de TiOₓ est très poreux. Le revêtement présente avantageusement selon ce mode une porosité ouverte traversante de 30 à 80% et la taille des pores est avantageusement comprise entre 300 micromètres et 10 millimètres.

L'invention se rapporte également un procédé de purification d'un fluide, notamment d'eaux usées ou de boues, lorsque celui-ci comprend des composés organiques tels que des médicaments utilisant le dispositif et la membrane tels que décrits précédemment.

Le procédé comprend au moins les étapes suivantes : une étape d'introduction desdites eaux usées ou boues dans un dispositif tel que décrit précédemment, une étape de mise en contact dudit fluide avec ladite membrane jouant le rôle d'électrode, en particulier d'anode, dans des conditions d'oxydation desdits composés organiques, et une étape de soutirage des eaux ainsi dépolluées.

Une membrane comportant une telle couche de revêtement peut par exemple être obtenue en insérant le support, en particulier une grille ou un tissu dans la mousse préalablement à l'étape de séchage (avant frittage) du procédé tel que décrit dans la publication EP1778600A1. Alternativement, lorsque la mousse constituant la couche de revêtement est obtenue par réplication d'une mousse en polymère (polyuréthane par exemple), le support peut être inséré dans la mousse polymère (avant ou après imprégnation par la barbotine de TiOx) avant le cycle de cuisson qui permet de brûler la mousse polymère et de fritter la mousse de TiOₓ.

Le dépôt de la couche de revêtement sur son support, notamment en titane ou en un métal comprenant du titane, peut être obtenu selon différents procédés dont quelques exemples sont donnés ci-après :
Selon un premier procédé, on peut procéder par anodisation du substrat en titane pour l'obtention d'une couche superficielle de TiO₂, qui est ensuite réduite en une couche de TiOₓ selon l'invention (c'est à dire avec x compris entre 1,5 et 1,9).

Plus précisément, le procédé peut être mis en oeuvre dans les conditions suivantes :
- on plonge une pièce métallique dans un bain d'anodisation classique (typiquement un bain d'acide sulfurique), puis
- on applique une différence de potentiel entre la pièce à anodiser et une cathode, typiquement de l'ordre de 10 à 100 volts,
- on traite thermiquement la pièce anodisée à une température comprise entre 300°C et 1100°C, de préférence entre 300°C et 900°C sous argon ou tout autre atmosphère exempte d'hydrogène.

Selon un second procédé, il est possible de déposer une couche de revêtement sur le substrat métallique en contactant celui-ci avec une solution de type sol-gel, par exemple d'un alcoxyde de titane tétravalent, en milieu alcoolique ou aqueux, la solution incluant une source de carbone supplémentaire telle qu'un composé organique supplémentaire ou du carbone noir, par exemple selon un procédé tel que décrit dans la demande de brevet WO2018/115749A1. Ce composé supplémentaire permet la réduction et la formation d'une couche d'oxyde TiOₓ selon l'invention, lors d'un traitement thermique de calcination de la couche de revêtement ainsi obtenue, par exemple sous atmosphère neutre ou réductrice.

Selon un autre procédé alternatif, le dépôt de la couche de revêtement peut être effectué directement par imprégnation à partir d'une suspension aqueuse ou de tout autre solvant de poudre de TiOx ou d'un mélange de poudre d'oxyde de titane TiO₂, préférentiellement sous forme anatase, complété par une source de carbone supplémentaire telle qu'un composé organique supplémentaire ou de carbone black tel que décrit dans la demande de brevet WO2018/115749A1. Selon ce deuxième mode, la couche de TiOx selon l'invention est obtenue par la réduction de la couche de TiO2 initiale lors d'un traitement thermique ultérieur, dans les conditions décrites dans la demande WO2018/115749A1.

Le procédé peut également consister en un dépôt par projection thermique, par exemple plasma de particules de TiOₓ sur le support métallique notamment dans les conditions suivantes :
La poudre utilisée pour la projection plasma peut être une poudre électrofondue (c'est à dire une poudre de TiOx fondue, puis refroidie et broyée notamment selon la demande de brevet EP2900602), de granulométrie moyenne comprise entre 10 et 100 micromètres, renfermant essentiellement les phases Ti₄O₇, Ti₅O₉, Ti₃O₅ et Ti₆O₁₁. Cette poudre est injectée, grâce à un gaz vecteur (par exemple l'argon selon un débit de l'ordre de 1 à 10l/min) dans un plasma généré par une torche Plasma alimentée en gaz plasmagènes (par exemple un mélange d'argon et d'hydrogène).

Le substrat peut être préalablement sablé pour une meilleure adhésion.

Selon un autre procédé alternatif, on peut procéder par oxydation chimique du substrat en titane pour l'obtention d'une couche superficielle de TiO₂, qui est ensuite réduite en une couche de TiOₓ selon l'invention.

Selon d'autres procédés alternatifs, on peut réaliser la couche de revêtement de TiOx par « Atomic layer Deposition », « Chemical Vapour Déposition » ou « physical vapour Déposition ».

Afin de ne pas alourdir inutilement la présente description, toutes les combinaisons possibles selon l'invention entre les différents modes préférés des compositions des produits selon l'invention, tels qu'ils viennent d'être décrits précédemment, ne sont pas reportées.

L'invention est définie par les revendications.

L'invention et ses avantages seront mieux compris à la lecture des exemples non limitatifs qui suivent.

### Exemples :

Dans ces exemples on a mesuré les performances de dégradation du paracétamol par deux réalisations selon l'invention.

### Exemple 1 (comparatif):

Une première membrane est obtenue par un procédé comprenant le dépôt plasma d'une poudre de TiOₓ sur une plaque de titane métallique imperméable à l'eau.

La poudre utilisée pour la projection plasma est une poudre électrofondue (c'est à dire une poudre de TiOx fondue, puis refroidie et broyée), de granulométrie moyenne de l'ordre de 30 micromètres, renfermant essentiellement les phases Ti₄O₇, Ti₅O₉, Ti₃O₅ et Ti₆O₁₁. Cette poudre est injectée, grâce à un gaz vecteur d'argon et avec un débit de 4l/min, dans un plasma généré par une torche Saint-Gobain Pro-Plasma alimentée en gaz plasmagènes (mélange d'Ar avec un débit 45 l/min et de H2 avec un débit de 11 l/min) sous une tension de 63-66V (courant 600A) ; un bouclier d'argon permet d'éviter la réoxydation des particules de TiOₓ lors de la projection. Le substrat est préalablement sablé par des grains d'alumine-zircone sous une pression de 5 bars. La distance de projection est de 110mm.

Les caractéristiques de la membrane sont les suivantes : Le substrat est une plaque de TA6V d'épaisseur 2mm. La couche de TiOₓ est déposée sur les 2 faces jusqu'à obtenir une épaisseur de revêtement d'environ 300 micromètres.
Parallèlement au dépôt sur la plaque selon l'invention, un autre dépôt a été réalisé dans les mêmes conditions, cette fois sur un substrat constitué d'une pastille d'un alliage de titane TA6V de diamètre 15mm non sablée. Après le dépôt plasma, le revêtement est récupéré puis analysé par DRX de manière à déterminer les phases constituant le revêtement de TiOₓ. L'analyse par DRX a donné les résultats suivants: phase principale majoritaire : Ti₄O₇; phases secondaires minoritaires: rutile; Ti₃O₅; Ti₅O₉; Ti₈O₁₅.

### Exemple 2 (comparatif):

Une seconde membrane est obtenue par un procédé comprenant le dépôt plasma d'une poudre de TiOₓ cette fois sur une grille de titane métallique.
Les caractéristiques de la membrane sont les suivantes :
Le substrat est une grille en titane de la société ITALFIM, dont les caractéristiques dimensionnelles sont les suivantes :
La grille de titane présente des trous sous forme de losanges avec une période selon la longue diagonale de 4mm; et selon la courte diagonale de 2,2mm, la largeur de la lanière étant de 0,6mm et son épaisseur de 0,5mm. On mesure que sa porosité globale est de l'ordre de 33% et le diamètre médian de ses pores (ses trous) est sensiblement égal à 1,1 mm de la façon suivante :
Sur une image obtenue par un microscope binoculaire, on fait un traitement d'analyse d'images en utilisant le logiciel de traitement d'image ImageJ pour estimer la surface des ouvertures. On calcule à partir de cette donnée le diamètre d'un disque de même surface et au final un diamètre médian des ouvertures. Le résultat obtenu a été vérifié en mesurant, sur la même image, la longueur de chacune des diagonales des losanges de la grille. On en déduit la surface desdits losanges puis le diamètre du disque de même surface.

La porosité globale de la grille a été déduite de ses longueur, largeur et épaisseur pour déterminer une «densité géométrique» en divisant le volume calculé (longueur × largeur × épaisseur) par la masse de la grille. En divisant par la densité théorique du Ti, on obtient la porosité de la grille (en%). Le calcul a été vérifié par la méthode d'Archimède.

Les conditions du dépôt plasma sont identiques à ceux de l'exemple 1.

Après projection plasma sur les 2 faces de la grille, l'épaisseur de lanière est mesurée sensiblement égale à 900pm micromètres par observation à la loupe binoculaire; l'épaisseur de lanière étant initialement de 600pm, on peut estimer une épaisseur de dépôt sensiblement égale à 150pm.

### Exemple 3 (selon l'invention):

Une troisième membrane est obtenue par un procédé comprenant le dépôt plasma d'une poudre de TiOₓ selon les mêmes conditions que précédemment décrites, cette fois sur une mousse de titane métallique. La mousse provient de la société American Elements.

Sa porosité est caractérisée par porosimétrie mercure : le volume poreux est de 35% et la taille médiane des pores en volume de 88 micromètres. Son épaisseur est de 2,5mm.
Un dépôt plasma de TiOₓ est réalisé sur les 2 faces de la mousse dans les mêmes conditions que précédemment décrites. Le dépôt ainsi obtenu a été observé sur une surface préalablement polie. On mesure une épaisseur de la couche de TiOₓ sur les parois de la mousse d'environ 30 micromètres. Les performances de dégradation du paracétamol sont mesurées en disposant les membranes décrites dans les exemples 1 à 3 dans un dispositif de purification comprenant:
Dans un bécher en verre de 500ml contenant de l'eau déminéralisée, on dissout 3,55 mg de Na₂SO₄ de la société VWR, et 30 mg de paracétamol (98%) de la société Acros Organics ; un agitateur magnétique tournant à 400 tours/min ; un bain-marie permettant de réguler la température du bécher à 30°C.

Sont immergées dans ce bécher :
- une anode (constituée par la plaque de Ti revêtue de TiOₓ pour l'exemple 1 ; la grille de Ti revêtue de TiOₓ pour l'exemple 2, la mousse revêtue de TiOₓ pour l'exemple 3). 33cm² de la membrane sont immergés dans chaque cas.
- une cathode en platine de la société HANNA Instruments.
- une électrode de référence Ag/AgCl saturée KCl de la société BioLogic.

Un courant de 165mA est imposé par un potentiostat Princeton Applied Research Model 273.

Pour mesurer la performance de dégradation des espèces organiques, on mesure la diminution de demande chimique en oxygène(DCO), exprimée en mg d'oxygène par litre. Elle représente la teneur totale de l'eau en matières oxydables. Ce paramètre correspond à la quantité d'oxygène qu'il faut fournir pour oxyder par voie chimique ces matières.

La DCO est mesurée comme suit : à intervalles réguliers, 2ml de l'échantillon à caractériser sont versés dans un tube réactif DCO de la société Hanna Instruments; le tube est porté à 150°C et maintenu 2h à 150°C, puis agité et refroidi ; la valeur de DCO est donnée par dosage colorimétrique grâce à un photomètre de la société Hanna Instrument ; avant chaque mesure, un « blanc » étalon, constitué de la solution salée par Na₂SO₄, mais sans paracétamol, est caractérisé de la même façon.

Le pourcentage de diminution de la DCO en fonction du temps est donné dans le tableau suivant pour la plaque (exemple comparatif), pour la grille (exemple 2) et pour la mousse (exemple 3):

**[Table 1]**

| | t=0 | t=4h |
|---|---|---|
| Plaque (exemple 1) | 0% | 15% |
| Grille (exemple 2) | 0% | 22% |
| Mousse (exemple 3) | 0% | 70% |

## Revendications

1. Dispositif électrochimique de purification d'un fluide, notamment d'eaux usées ou de boues, par oxydation des composés organiques contenus dans ledit fluide comprenant une membrane électrochimique filtrante, ladite membrane comprenant :
- un support métallique qui est une mousse à pores ouverts dont la porosité ouverte globale est comprise entre 20 et 90% et le diamètre de pore médian, en volume, est compris entre 20 micromètres et 10 millimètres, ledit support étant perméable audit fluide,
- une couche de revêtement dudit support comprenant ou de préférence étant constitué par un oxyde de titane de formule générique TiOₓ, avec x compris entre 1,5 et 1,9.

2. Dispositif selon la revendication 1, dans lequel la membrane est configurée pour jouer le rôle d'électrode, en particulier d'anode, permettant la dégradation partielle ou totale desdits organiques.

3. Dispositif selon l'une des revendications précédentes dans lequel le support comprend ou est constitué d'un métal choisi parmi le titane, l'inox, de préférence le titane.

4. Dispositif selon l'une des revendications précédentes dans lequel le support présente une porosité comprise entre 20 et 80%.

5. Dispositif selon l'une des revendications précédentes dans lequel le support présente un diamètre de pore médian, en volume compris entre 20 micromètres et 5 millimètres.

6. Dispositif selon l'une des revendications 1 à 5 dans lequel le support présente un diamètre de pore médian supérieur à 70 micromètres de préférence supérieure à 100 micromètres.

7. Dispositif selon l'une des revendications précédentes, dans lequel le support est sous la forme d'une plaque ou d'un tube.

8. Dispositif selon l'une des revendications précédentes, dans lequel le matériau constituant la couche de revêtement comprend plus de 90% en poids, au total, de phases de Magnéli sélectionnées parmi Ti₄O₇, Ti₅O₉, Ti₆O₁₁ ou d'un mélange d'au moins deux de ces phases.

9. Dispositif selon l'une des revendications précédentes, comprenant en outre des moyens d'introduction du fluide à purifier, des moyens de circulation du fluide, de son éventuelle mise sous pression, des moyens de mise sous tension électrique du support et des moyens de récupération du fluide purifié.

10. Utilisation d'un dispositif de purification selon l'une des revendications 1 à 9 pour l'oxydation d'un fluide comprenant des composés organiques, en particulier des composés organiques bioréfractaires, en particulier des médicaments.

11. Utilisation selon la revendication 10, dans lequel le support est une mousse métallique, comprenant ou constitué d'un métal choisi parmi le titane, l'inox, de préférence le titane.

12. Procédé de purification d'un fluide, notamment d'eaux usées ou de boues, ledit fluide comprenant des composés organiques tels que des bioréfractaires, ledit procédé comprenant une étape d'introduction dudit fluide dans un dispositif selon l'une des revendications 1 à 9, une étape de mise en contact dudit fluide avec ladite membrane jouant le rôle d'électrode, en particulier d'anode, dans des conditions d'oxydation desdits composés organiques, et une étape de soutirage du fluide ainsi dépollué.

## Patentansprüche

1. Elektrochemische Vorrichtung zur Reinigung eines Fluids, insbesondere von Abwasser oder Schlämmen, durch Oxidation der in dem Fluid enthaltenen organischen Verbindungen, umfassend eine elektrochemische Filtermembran, wobei die Membran umfasst:
- einen Metallträger, bei dem es sich um einen offenporigen Schaum handelt, dessen offene Gesamtporosität zwischen 20 und 90 % liegt und dessen mittlerer Porendurchmesser, bezogen auf das Volumen, zwischen 20 Mikrometer und 10 Millimeter liegt, wobei der Träger für das Fluid durchlässig ist,
- eine Deckschicht des Trägers, umfassend ein Titanoxid der allgemeinen Formel TiOₓ, wobei x zwischen 1,5 und 1,9 beträgt, oder vorzugsweise aus diesem bestehend.

2. Vorrichtung nach Anspruch 1, wobei die Membran konfiguriert ist, um die Rolle einer Elektrode, insbesondere einer Anode, zu übernehmen, wobei der teilweise oder vollständige Abbau der organischen Stoffe ermöglicht wird.

3. Vorrichtung nach einem der vorstehenden Ansprüche, wobei der Träger ein Metall umfasst oder aus diesem besteht, ausgewählt aus Titan, rostfreiem Metall, vorzugsweise Titan.

4. Vorrichtung nach einem der vorstehenden Ansprüche, wobei der Träger eine Porosität zwischen 20 und 80 % aufweist.

5. Vorrichtung nach einem der vorstehenden Ansprüche, wobei der Träger einen mittleren Porendurchmesser, bezogen auf das Volumen, zwischen 20 Mikrometern und 5 Millimetern aufweist.

6. Vorrichtung nach einem der Ansprüche 1 bis 5, wobei der Träger einen mittleren Porendurchmesser von größer als 70 Mikrometern, vorzugsweise größer als 100 Mikrometern, aufweist.

7. Vorrichtung nach einem der vorstehenden Ansprüche, wobei der Träger in Form einer Platte oder eines Rohres vorliegt.

8. Vorrichtung nach einem der vorstehenden Ansprüche, wobei das Material, aus dem die Deckschicht besteht, insgesamt zu mehr als 90 Gew.-% Magnéli-Phasen, die aus Ti₄O₇, Ti₅O₉, Ti₆O₁₁ oder einer Mischung von mindestens zwei dieser Phasen ausgewählt sind, umfasst.

9. Vorrichtung nach einem der vorstehenden Ansprüche, ferner umfassend Mittel zum Einführen des zu reinigenden Fluids, Mittel zum Zirkulieren des Fluids, um es gegebenenfalls unter Druck zu setzen, Mittel, um den Träger unter elektrische Spannung zu setzen, und Mittel zum Rückgewinnen des gereinigten Fluids.

10. Verwendung einer Reinigungsvorrichtung nach einem der Ansprüche 1 bis 9 zur Oxidation eines Fluids, umfassend organische Verbindungen, insbesondere biorefraktäre organische Verbindungen, insbesondere Arzneimittel.

11. Verwendung nach Anspruch 10, wobei der Träger ein Metallschaum ist, umfassend ein Metall oder aus diesem bestehend, ausgewählt aus Titan, rostfreiem Metall, vorzugsweise Titan.

12. Verfahren zum Reinigen eines Fluids, insbesondere von Abwasser oder Schlämmen, wobei das Fluid organische Verbindungen wie biorefraktäre Stoffe umfasst, wobei das Verfahren einen Schritt des Einführens des Fluids in eine Vorrichtung nach einem der Ansprüche 1 bis 9, einen Schritt des Inkontaktbringens des Fluids mit der Membran, die die Rolle einer Elektrode, insbesondere einer Anode, übernimmt, unter Oxidationsbedingungen der organischen Verbindungen, und einen Schritt zum Entnehmen des so entgifteten Fluids umfasst.

## Claims

1. Electrochemical device for purifying a fluid, in particular waste water or sludge, by oxidation of the organic compounds contained in said fluid, said electrochemical device comprising an electrochemical filter membrane, said membrane comprising:
- a metal support which is an open-pore foam having an overall open porosity of between 20 and 90% and a median pore diameter, by volume, of between 20 micrometers and 10 millimeters, said support being permeable to said fluid,
- a coating layer on said support comprising or preferably consisting of a titanium oxide of generic formula TiOₓ, x being between 1.5 and 1.9.

2. Device according to claim 1, wherein the membrane is designed to act as an electrode, in particular an anode, enabling partial or total degradation of said organic compounds.

3. Device according to either of the preceding claims, wherein the support comprises or consists of a metal chosen from titanium and stainless steel, preferably titanium.

4. Device according to any of the preceding claims, wherein the support has a porosity of between 20 and 80%.

5. Device according to any of the preceding claims, wherein the support has a median pore diameter, by volume, of between 20 micrometers and 5 millimeters.

6. Device according to any of claims 1 to 5, wherein the support has a median pore diameter greater than 70 micrometers, preferably greater than 100 micrometers.

7. Device according to any of the preceding claims, wherein the support is in the form of a plate or tube.

8. Device according to any of the preceding claims, wherein the material constituting the coating layer comprises more than 90% by weight, in total, of Magnéli phases selected from Ti₄O₇, Ti₅O₉, Ti₆O₁₁ or a mixture of at least two of these phases.

9. Device according to any of the preceding claims, further comprising means for introducing the fluid to be purified, means for circulating the fluid, for pressurizing it if necessary, means for applying electrical voltage to the support and means for recovering the purified fluid.

10. Use of a purification device according to any of claims 1 to 9 for oxidizing a fluid comprising organic compounds, in particular biorefractory organic compounds, in particular drugs.

11. Use according to claim 10, wherein the support is a metal foam, comprising or consisting of a metal chosen from titanium and stainless steel, preferably titanium.

12. Method for purifying a fluid, in particular waste water or sludge, said fluid comprising organic compounds such as biorefractory compounds, said method comprising a step of introducing said fluid into a device according to any of claims 1 to 9, a step of bringing said fluid into contact with said membrane acting as an electrode, in particular as an anode, under conditions of oxidation of said organic compounds, and a step of extracting the fluid thus depolluted.
